# DEMANDE DE BREVET EUROPEEN

(11) **EP 0 681 165 A1**
(43) Date de publication de la demande: **08.11.1995**
(21) Numéro de dépôt: 95450003.9
(22) Date de dépôt: 22.03.1995
(51) Int. Cl.: G01G 23/00, B66F 17/00

(54) **Dispositif de contrôle de surcharges pour nacelles ou plateformes élévatrices**

(30) Priorité: 24.03.1994 FR 9403921
(71) Demandeur: Allemane, Claude, F-47000 Agen (FR)
(72) Inventeur: Allemane, Claude, F-47000 Agen (FR)
(74) Mandataire: Trolliet, Jean-Claude

(57) **Abrégé**

L'invention concerne un dispositif de contrôle de surcharges pour nacelles ou plateformes élévatrices comportant un chassis supérieur support de surface de travail (1) relié aux bras horizontaux (2) constituant le chassis inférieur porteur (13) solidaire de l'ossature élévatrice, lesdits chassis étant reliés entre eux et dotés d'au moins un contacteur (10) fixé sur une des traverses (7) reliant les bras (2) à l'aplomb duquel est maintenue une vis (9) réglable en hauteur sur une console (8) du chassis (1) supérieur, ledit chassis (1) supérieur étant relié au chassis inférieur (2) au moyen de plots compressibles (6) dont la charge sur la surface de travail provoque leur écrasement permettant d'ajuster l'extrémité de la vis (9) au regard du contacteur (10) à la distance correspondant à la charge à ne pas dépasser afin qu'au delà le capteur (10) soit sollicité pour provoquer l'émission d'un bruit sonore ou stopper toute évolution de la nacelle ou plateforme élévatrice ou les deux à la fois.

## Description

La présente invention concerne un dispositif pour le contrôle des surcharges auxquelles peuvent être soumises les nacelles ou plateformes élévatrices permettant soit de stopper l'évolution de la nacelle ou plateforme, soit de déclencher un signal sonore, soit les deux à la fois.

On connaît différents dispositifs de contrôle de surcharges pour nacelles ou plateformes élévatrices, ces dispositifs sont généralement disposés sur ou à proximité des organes servant à l'élévation de la nacelle ou plateforme, selon les organes par exemple un vérin hydraulique, la charge d'alarme définie selon le matériel est réglée au moyen d'un présostat agissant sur la pression afin de stopper tout déplacement, ce mode de contrôle est trés aléatoire car les forces soumises aux organes sont trés variables selon la position de la nacelle ou plateforme ce qui ne permet pas un réglage acceptable dans le cadre des tolérances raisonnables.

On connaît aussi l'usage de jauges de contraintes aux capteurs électroniques de conception fragile et d'un prix élevé agissant sur un organe sonore lorsqu'il y a surcharge, ce dispositif est tout aussi aléatoire compte tenu des charges comme préalablement décrit selon la hauteur et la position de la nacelle ou de la plateforme élévatrice.

On connaît aussi par le brevet US A 2 578 006, l'usage d'un levier articulé en ses extrémités sur une traverse servant à l'accrochage des câbles de levage d'une cabine d'ascenseur, ledit levier pivotant en son centre sur un pivot lorsqu'il y a déformation de la traverse recevant les câbles de levage lors de surcharges, ledit pivotement engendrant le déplacement d'un levier secondaire solidaire en une extrémité du premier levier qui engendre le déplacement de l'autre extrémité libre libérant un interrupteur.

L'invention a pour but de pallier aux inconvénients précédemment exposés.

L'invention a pour objet un dispositif de contrôle de surcharges pour nacelles ou plateformes élévatrices caractérisé en ce qu'il comporte selon le mode de liaison du chassis supérieur de la surface de travail de la plateforme ou nacelle aux bras horizontaux ou chassis inférieur porteur de l'ossature élévatrice au moins un contacteur ou capteur fixé sur une des traverses ou consoles des bras ou chassis inférieur porteur à l'aplomb duquel est maintenue une vis réglable en hauteur sur une des traverses ou consoles du chassis supérieur de la surface de travail, le chassis supérieur de la surface de travail étant relié au chassis inférieur porteur ou bras horizontaux par au moins un plot compressible en caoutchouc ou ressort taré dont la charge sur la surface de travail provoque leur écrasement permettant d'ajuster l'extrémité de la ou des vis au regard du contacteur ou capteur à la distance correspondant à la charge à ne pas dépasser afin qu'au delà de ladite charge le capteur soit sollicité pour provoquer l'émission d'un bruit sonore ou stopper toute évolution de la nacelle ou plateforme élévatrice en agissant sur les organes moteurs ou les deux à la fois.

D'autres caractéristiques et avantages de l'invention ressortiront plus clairement de la description qui va suivre faite en regard des dessins joints donnés à titre d'exemple non limitatif, où :
- la figure 1 est une vue en plan d'une nacelle ou plateforme de petite surface de travail doté du dispositif de surcharge,
- la figure 2, une vue en coupe longitudinale de la nacelle ou plateforme représentée figure 1,
- la figure 3, une vue en coupe transversale au niveau du dispositif de surcharge de la nacelle ou plateforme représenté figure 1,
- la figure 4, une vue en plan d'une nacelle ou plateforme élévatrice de grande surface,
- la figure 5, une vue en coupe transversale d'une nacelle ou plateforme telle que représentée figure 4.

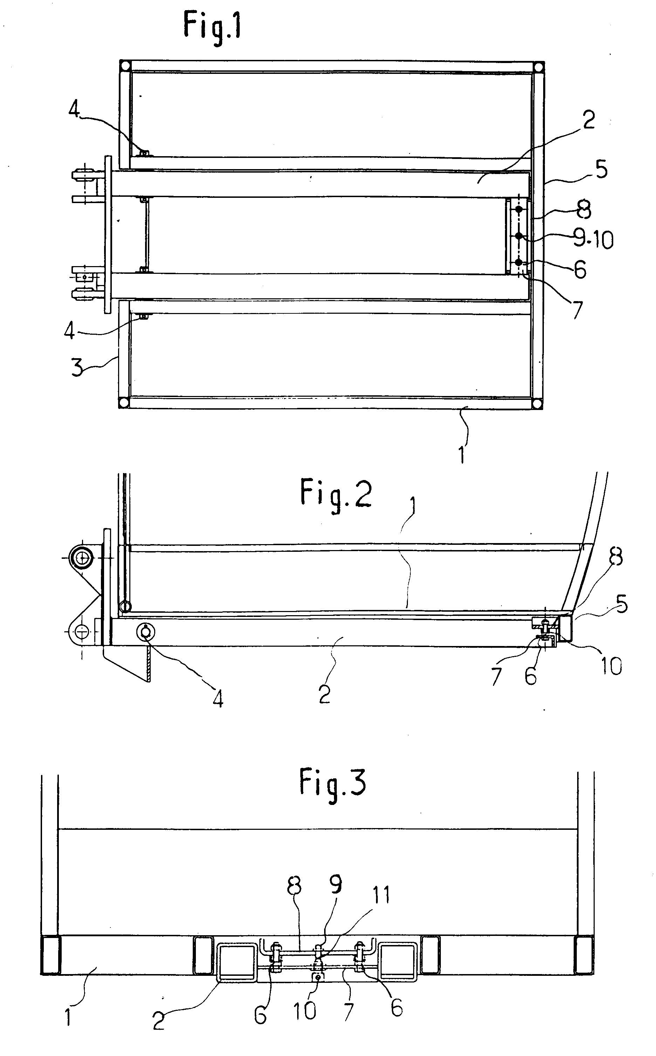

Tel que représenté figures 1 à 3, pour un chassis supérieur 1 de surface de travail de faible dimension de nacelle ou plateforme élévatrice maintenu sur des bras horizontaux 2 constituant le chassis inférieur solidaires de l'ossature élévatrice non représentée, le dispositif comporte en l'extrémité 3 du chassis supérieur 1 à proximité de l'ossature élévatrice des articulations 4 la reliant aux bras 2, en l'autre extrémité 5 le chassis supérieur 1 est relié aux bras 2 au moyen de plots compressibles, tel que caoutchouc ou ressort taré 6, lesdits plots 6 étant maintenus en appui sur une traverse 7 reliant les bras 2 et une console 8 solidaire du chassis supérieur 1, intermédiairement entre les plots 6, une vis 9 réglable en hauteur est maintenue sur la console 8 à l'aplomb d'un capteur ou contacteur 10 solidaire de la traverse 7 relié aux organes moteurs du chariot ou à un élément sonore non représenté, le réglage en hauteur de la vis 9 est réalisé selon l'écrasement des plots compressibles 9 et la charge sur la surface de travail à ne pas dépasser de sorte qu'au delà de ladite charge l'extrémité 11 de la vis 9 agisse sur le contacteur ou le capteur 10 afin de provoquer l'arrêt des organes moteurs du chariot ou la mise en marche de l'élément sonore ou les deux à la fois afin de prévenir de la mise en surcharge de la nacelle ou plateforme.

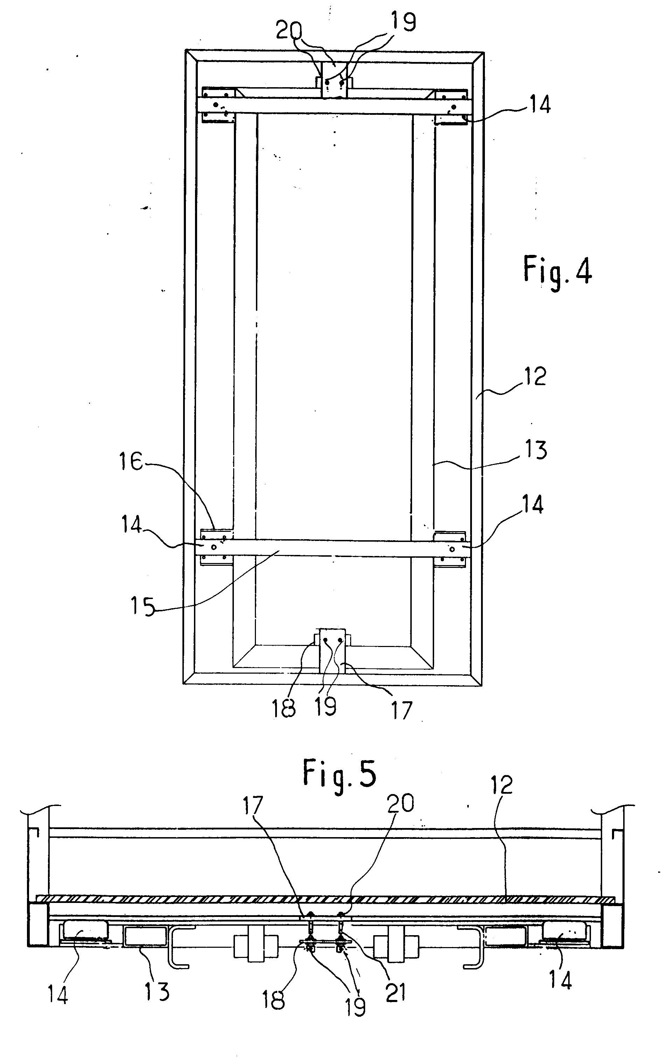

Selon une variante de réalisation et notamment pour des nacelles ou plateformes élévatrices de grande dimension, tel que représenté figures 4 et 5, le chassis supérieur 12 de la surface de travail est relié au chassis inférieur porteur 13 horizontal de l'ossature élévatrice non représentée au moyen de quatre plots compressibles 14 en caoutchouc ou ressorts tarés, lesdits plots 14 étant maintenus en appui sur les traverses 15 et consoles 16, intermédiairement à l'aplomb de l'axe longitudinal du chassis supérieur 12 aux extrémités de ce dernier sont disposés et maintenus sur chacunes des traverses et/ou consoles 17 et 18 au moins deux capteurs ou contacteurs 19 à l'aplomb desquels et sur les traverses 17 sont maintenues les vis réglables en hauteur 20 permettant comme précédemment décrit de régler la hauteur de l'extrémité 21 selon l'écrasement des plots 14 suivant les charges supportées et à ne pas dépasser de sorte qu'au seuil de ces dernières l'extrémité 21 actionne les capteurs ou contacteurs 19 pour agir sur les organes moteurs pour stopper toute évolution, ou sur les organes sonores ou sur les deux à la fois, chacun des contacteurs 19 de chaque traverse ou console a pour fonction selon son branchement électrique, soit l'un d'agir pour une charge excédente ponctuelle, ou l'autre pour une charge excédente répartie, il va de soi que les contacteurs 19 et vis 20 peuvent avantageusement être disposés et répartis selon l'axe transversal ou les deux axes du chassis 12 de la surface de travail et porteuse 13 ou symétriquement à l'aplomb de chacun des axes, ou selon une autre variante un capteur ou contacteur 19 aux extrémités des quatre axes ayant sa fonction prédéterminée selon le montage à la charge déterminée, soit une charge ponctuelle soit une charge répartie, ou les deux à la fois.

## Revendications

**1°)** Dispositif de contrôle de surcharge pour nacelles ou plateformes élévatrices caractérisé en ce qu'il comporte des plots compressibles de liaison en caoutchouc ou ressorts tarés (6, 14) reliant le chassis supérieur (1, 12) de la surface de travail aux bras (2) ou au chassis porteur inférieur (13) de l'ossature élévatrice dont la charge sur la surface de travail provoque l'écrasement desdits plots ou ressorts (6, 14), et au moins un contacteur ou capteur (10, 19) fixé sur une traverse (7) ou console (18) des bras (2) ou chassis porteur inférieur (13) à l'aplomb duquel est maintenue une vis (9, 20) réglable en hauteur sur une traverse (17) ou console (8) du chassis supérieur (1, 12), la charge sur la surface de travail provoquant l'écrasement des plots (6, 14) permettant d'ajuster l'extrêmité de la vis (9, 20) au regard du contacteur ou capteur (10, 19) à la distance d'écrasement correspondant à la charge à ne pas dépasser de sorte qu'au delà de ladite charge le capteur (10, 19) soit sollicité pour provoquer l'émission d'un bruit sonore ou stopper toute évolution de la nacelle ou plateforme élévatrice en agissant sur les organes moteurs ou les deux à la fois.

**2°)** Dispositif de contrôle de surcharges pour nacelles ou plateformes élévatrices selon la revendication 1 caractérisé en ce que pour un chassis supérieur (1) relié aux bras (2) horizontaux de l'ossature inférieure élévatrice au moyen d'articulations (4) en une extrémité (3), à l'autre extrémité (5) le chassis supérieur (1) est relié aux bras (2) au regard de deux plots compressibles(6) en appui sur une traverse (7) reliant les bras (2) et une console (8) solidaire du chassis supérieur (1), intermédiairement un contacteur ou capteur (10) est maintenu sur la traverse (7) à l'aplomb d'une vis (9) réglable en hauteur maintenue sur la console (8).

**3°)** Dispositif de contrôle de surcharges pour nacelles ou plateformes élévatrices selon la revendication 1 caractérisé en ce que pour un chassis supérieur (12) relié à un chassis porteur inférieur (13) de l'ossature élévatrice au moyen de quatre plots (14) compressibles maintenus en appui chacun sur la traverse (15) du chassis supérieur (12) et consoles (16) du chassis porteur inférieur (13), intermédiairement entre les plots (14) à l'aplomb de l'axe longitudinal du chassis supérieur (12) et aux extrémités de ce dernier sont disposés et maintenus sur des traverses et/ou consoles (17, 18) au moins deux capteurs ou contacteurs (19) à l'aplomb desquels sur les traverses ou consoles (17) sont maintenues les vis réglables en hauteur (20).

**4°)** Dispositif de contrôle de surcharges pour nacelles ou plateformes élévatrices selon les revendications 1 et 3 caractérisé en ce que chacun des ensembles de deux contacteurs ou capteurs (19) ont leur fonction selon le branchement électrique, l'un pour agir selon des charges excédentes potentielles, l'autre pour une surcharge excédente répartie sur la surface de travail.

**5°)** Dispositif de contrôle de surcharges pour nacelles ou plateformes élévatrices selon les revendications 1, 3 et 4 caractérisé en ce que les contacteurs ou capteurs (19) agissant pour des charges excédentes potentielles et pour des charges excédentes réparties sont disposés de manière symétrique selon les axes longitudinaux et transversaux du chassis (12, 13).

**6°)** Dispositif de contrôle de surcharges pour nacelles ou plateformes élévatrices selon les revendications 4 et 5 caractérisé en ce que les contacteurs (19) agissent pour des charges réparties ou ponctuelles indépendamment ou les deux à la fois.
